# EUROPÄISCHE PATENTSCHRIFT

(11) **EP 1 377 483 B1**
(45) Veröffentlichungstag und Bekanntmachung des Hinweises auf die Patenterteilung: **08.10.2008**
(21) Anmeldenummer: 01991708.7
(22) Anmeldetag: 29.12.2001
(51) Int. Cl.: B60Q 1/14

(54) **VERFAHREN UND VORRICHTUNG ZUM AUTOMATISCHEN STEUERN VON BELEUCHTUNGSEINRICHTUNGEN**
METHOD AND DEVICE FOR AUTOMATICALLY CONTROLLING ILLUMINATION DEVICES
PROCEDE ET DISPOSITIF DE COMMANDE AUTOMATIQUE DE DISPOSITIFS D'ECLAIRAGE

(30) Priorität: 03.04.2001 DE 10116490
(43) Veröffentlichungstag der Anmeldung: 07.01.2004
(73) Patentinhaber: ROBERT BOSCH GMBH, 70442 Stuttgart (DE)
(72) Erfinder: SCHMITT, Patrick, 77839 Lichtenau (DE); HOG, Norbert, 77815 Buehl (DE); HODAPP, Bruno, 77855 Achern-Oensbach (DE); MICHENFELDER, Gebhard, 77839 Lichtenau (DE); MEIER, Hans, 77833 Ottersweier (DE); BLITZKE, Henry, 77815 Buehl (DE); SCHNEIDER, Andreas, 77815 Buehl (DE); NONNENMACHER, Pierre, F-67500 Niederschaeffolsheim (FR)
(86) Internationale Anmeldenummer: PCT/DE2001/004946
(87) Internationale Veröffentlichungsnummer: WO 2002/081260

(56) Entgegenhaltungen:
- EP-A- 1 006 020
- GB-A- 2 204 946
- GB-A- 2 312 504
- US-A- 3 829 828
- US-A- 5 187 383

## Beschreibung

### Stand der Technik

Die Erfindung betrifft ein Verfahren und eine Vorrichtung zum automatischen Steuern von Beleuchtungseinrichtungen nach Gattung der unabhängigen Ansprüche.

Eine solche Einrichtung ist bereits durch die
DE 35 03 451 A1 bekannt. Diese Einrichtung weist eine Sensoreinrichtung auf die mehrere Sensoren umfasst, durch die die Lichtverhältnisse in der Umgebung des Fahrzeugs erfasst werden. Die Sensoreinrichtung ist mit einer Auswerteeinrichtung verbunden, in der aus den signalen der Sensoreinrichtung ermittelt wird, ob bei den aktuell vorliegenden Lichtverhältnissen in der Umgebung des Fahrzeugs eine Änderung des Schaltzustandes der Beleuchtungseinrichtungen erforderlich ist. Durch diese bekannte Einrichtung ist zwar eine automatische Schaltung der Beleuchtungseinrichtungen, d.h. von Scheinwerfern und Rückleuchten, des Fahrzeugs bei sich ändernden allgemeinen Lichtverhältnissen ermöglicht, jedoch können, von der Einrichtung bestimmte Änderungen der Lichtverhältnisse in der Umgebung des Fahrzeugs nicht erkannt werden.

Aus der US-5,187,383 und aus der GB-A-2 312 507 sind Vorrichtungen bzw. Verfahren bekannt, die die Merkmale der Oberbegriffe der Ansprüche 1 und 7 aufzeigen.

Insbesondere bei schwierigen Lichtverhältnissen, beispielsweise in der Dämmerung, werden die Beleuchtungseinrichtungen ungünstig ausgeschaltet.

### Vorteile der Erfindung

Das erfindungsgemäße Verfahren mit den Merkmalen des Hauptanspruchs hat den Vorteil, dass die Länge des Zeitintervalls das nach einer Helligkeitsänderung vergehen muss, um die Beleuchtungseinrichtungen abzuschalten, veränderbar ist. Auf diese Weise wird ein verbessertes Verhalten der Beleuchtungseinrichtungen, insbesondere bei schwierigen Lichtverhältnissen im Grenzbereich zwischen Tag und Nacht, also in der Dämmerung erreicht. In diesen Situationen ist es besonders wichtig, dass bei wechselnden Lichtverhältnissen, wie beispielsweise Brücken- und Tunneldurchfahrten, die Beleuchtungseinrichtungen eingeschaltet bleiben und trotzdem ein störender Blinklichteffekt vermieden wird. Dieser wäre für andere Verkehrsteilnehmer irritierend und reduziert darüber hinaus die Lebensdauer der Scheinwerfer, Rückleuchten und anderen Beleuchtungseinrichtungen.

Durch die in den Unteransprüchen aufgeführten Maßnahmen ergeben sich vorteilhafte Weiterbildungen und Verbesserungen der im Hauptanspruch angegebenen Merkmale.

Als weiterer Vorteil erweist es sich, wenn die Beleuchtungseinrichtungen länger eingeschaltet bleiben, obwohl die Umgebungshelligkeit dies nicht mehr erfordern würde. Dies entspricht einer längeren Nachleuchtzeit der Beleuchtungseinrichtungen, beispielsweise in der Dämmerungsphase bei tiefstehender Sonne.

Besonders vorteilhaft ist es, wenn die Länge des Zeitintervalls in Abhängigkeit der vom Helligkeitsensor abgegebenen ersten Signale veränderbar ist. So können Helligkeitsänderungen oder auch spezielle Effekte, wie beispielsweise eine detektierte künstliche Lichtquelle, direkt das Zeitintervall beeinflussen.

Als besonders vorteilhaft erweist sich dabei, wenn der Zustand der Dämmerung erkennbar ist und das Zeitintervall im Fall erkannter Dämmerung länger gewählt wird als im Falle nicht erkannter Dämmerung. Dies ist insbesondere deshalb vorteilhaft, da beispielsweise morgens, bei aufgehender Sonne, die Beleuchtungseinrichtungen besser länger eingeschaltet bleiben als bei hellem Sonnenschein zur Mittagszeit, um die Sicherheit zu erhöhen.

Insbesondere ist dabei vorteilhaft wenn die Dämmerung dadurch erkannt wird, dass die ersten Signale des Heiligkeitsensors während eines weiteren Zeitintervalls innerhalb eines Signalgrößenfensters liegen. Dies lässt Rückschlüsse darauf zu, dass die Helligkeit sich nur langsam ändert, was ein typisches Indiz für vorliegende Dämmerung ist.

Als einfache Möglichkeit ist vorteilhafterweise das Signalgrößenfenster von der ersten Schwelle, die den Ausschaltzeitpunkt beeinflusst und einer zweiten Schwelle, die den Einschaltzeitpunkt beeinflusst, gebildet. Natürlich ist aber auch ein anderes, insbesondere kleineres Signalgrößenfenster möglich.

Besonders vorteilhaft ist, wenn die Zeitzählung des Zeitintervalls unterbrochen wird, wenn die ersten Signale die erste Schwelle nach einem Unterschreiten welches den Beginn auslöst, wieder kurzzeitig überschreiten. Dies ist insbesondere deshalb ein Vorteil, da auf diese Weise kurze Helligkeitsänderungen wie sie beispielsweise bei direkter Sonneneinstrahlung in der Dämmerung möglich sind, berücksichtigt werden, ohne dass das Zeitintervall wieder auf das Normalzeitintervall zurückgesetzt wird.

Weiters ist vorteilhaft wenn das Zeitintervall wieder auf das vergrößerte Zeitintervall zurückgesetzt wird, wenn die Einschaltschwelle als zweite Schwelle wieder überschritten wird. Dann wird davon ausgegangen, dass nur ein kurzzeitiges Dunkelereignis, beispielsweise eine Durchfahrt unter einer Brücke, stattgefunden hat, was an der grundlegenden Beleuchtungssituation - beispielsweise der Dämmerung - nichts ändert. Bei einem folgenden Unterschreiten der ersten Schwelle wird so das volle vergrößerte Zeitintervall beibehalten, bis die Beleuchtungseinrichtungen ausgeschaltet werden, anstatt das durch die Unterbrechungen bereits verkürzte vergrößerte Zeitintervall.

Die erfindungsgemäße Vorrichtung mit den Merkmalen des Anspruchs 9 hat den Vorteil, dass sie die Beleuchtungseinrichtungen, insbesondere in Phasen von schwierigen Lichtverhältnissen, zu einem optimalen Zeitpunkt nach einem Einschalten wieder abschaltet.

Besonders vorteilhaft ist dabei, wenn die Steuereinrichtung derart ausgebildet ist, dass sie die Länge des Zeitintervalls in Abhängigkeit der ersten Signale verändert um einen optimalen Ausschaltzeitpunkt der Beleuchtungseinrichtungen zu bestimmen, insbesondere dann, wenn charakteristische Helligkeitszustände, wie Tunnelfahrt oder ähnliches, erkannt werden.

Darüber hinaus ist es vorteilhaft wenn die Vorrichtung einen getakteten Zähler aufweist der zum Zeitpunkt T1, wenn die ersten Signale die erste Schwelle unterschreiten, zu zählen beginnt, bei einem folgenden Überschreiten der ersten Schwelle stoppt und bei abermaligen Unterschreiten der ersten Schwelle wieder weiterzählt, bis das vor dem Zeitpunkt T1 festgelegte Zeitintervall abgelaufen ist worauf die Beleuchtungseinrichtungen abgeschaltet werden, der Zähler auf das Normalzeitintervall zurückgesetzt wird und bei vorzeitigem Überschreiten der weiteren Schwelle auf das volle vergrößerte Zeitintervall zurückgesetzt wird.

### Zeichnungen

Ein Ausführungsbeispiel der Erfindung ist in den Zeichnungen dargestellt und in der nachfolgenden Beschreibung näher erläutert. Es zeigen:
Figur 1, einen typischen Verlauf von S1 über der Zeit,
Figur 2 das erfindungsgemäße Verfahren in einer schematischen Darstellung und
Figur 3 eine erfindungsgemäße Vorrichtung in einer schematischen Darstellung.

### Beschreibung des Ausführungsbeispiels

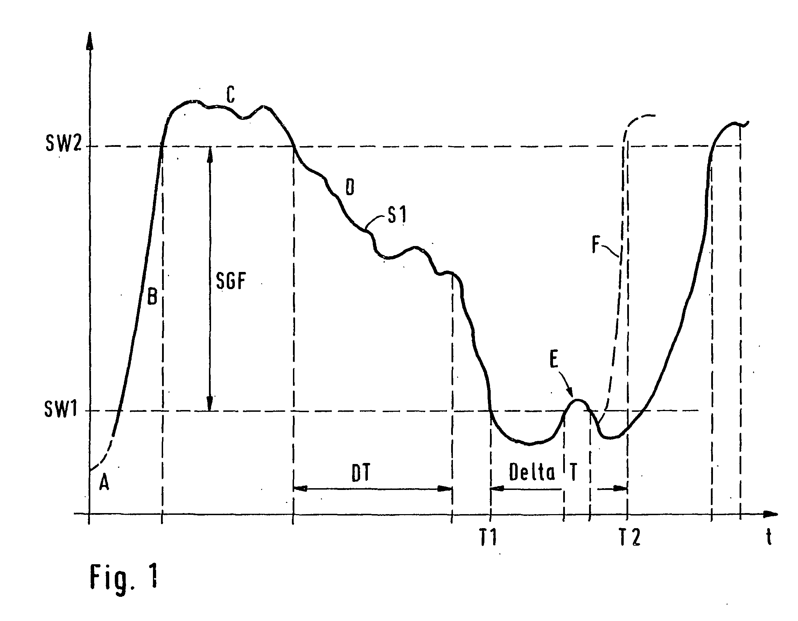

In Figur 1 ist ein typischer Verlauf der ersten Signale S1 während einer Fahrt dargestellt. In einem ersten Abschnitt A sind die Beleuchtungseinrichtungen 14 ausgeschaltet da eine ausreichende Umgebungshelligkeit vorhanden ist. Im zweiten Abschnitt B sinkt die Umgebungshelligkeit plötzlich rapide ab, wie dies beispielsweise bei der Einfahrt in einen Tunnel der Fall sein kann. Zu dem Zeitpunkt, an dem die ersten Signale S1 eine zweite Schwelle SW2, beispielsweise 1000 Lux überschreiten, werden die Beleuchtungseinrichtungen 14 eingeschaltet. In einem dritten Bereich C verändert sich die Umgebungshelligkeit nur wenig, so dass die Beleuchtungseinrichtungen 14 eingeschaltet bleiben. In einem darauffolgenden Bereich D steigt die Umgebungshelligkeit und damit das Signal S1 wieder an. Dies ist beispielsweise dann der Fall wenn aus einem Tunnel herausgefahren wird und in einer Dämmerungsphase nur wenig Licht auf den Helligkeitsensor 28 fällt. Nach Unterschreiten der zweiten Schwelle SW2 wird überprüft, ob die ersten Signale S1 während des weiteren Zeitintervalls DT innerhalb eines Signalgrößenfensters SGF liegen. Ist dies der Fall so wird das Zeitintervall DeltaT vergrößert, beispielsweise auf etwa 255 Sekunden, da auf diese Weise eine 8 Bit Variable belegt werden kann. Normalerweise beträgt dieses Intervall beispielsweise etwa 5 Sekunden, was im folgenden als Normalzeitintervall bezeichnet werden soll. Dieses Normalzeitintervall ist also das Intervall nachdem die Beleuchtungseinrichtungen 14 nach einem plötzlichen Helligkeitswechsel ausgeschaltet werden, wenn also kein Sonderzustand wie Dämmerung, Regenfahrt oder Nebelfahrt detektiert werden.

Steigt die Helligkeit im weiteren Verlauf weiter an, so beginnt zu dem Zeitpunkt, an dem die ersten Signale S1 eine erste Schwelle SW1, beispielsweise 3500 Lux unterschreiten, das Zeitintervall DeltaT, nach dessen Ablauf die Beleuchtungseinrichtungen 14 ausgeschaltet werden sollen, zu laufen. In diesem Bereich DeltaT können die ersten Signale S1 auch die erste Schwelle SW1 wiederum überschreiten, wie dies im Abschnitt E gezeigt ist. Während dieser Zeit wird die Zeitzählung vom Zeitintervall DeltaT ausgesetzt. Nach Ablauf von DeltaT werden die Beleuchtungseinrichtungen 14 zum Zeitpunkt T2 ausgeschaltet. Wird vor Ablauf des Zeitintervalls DeltaT, also vor dem Zeitpunkt T2, die zweite Schwelle SW2 überschritten, wie dies im Bereich F gezeigt ist, so bleiben die Beleuchtungseinrichtungen 14 eingeschaltet. Das Zeitintervall DeltaT bleibt dann zwar vergrößert, wird jedoch wieder auf den Anfang zurückgesetzt, so daß bei erneutem unterschreiten der ersten Schwelle SW1 die Beleuchtungseinrichtungen 14 erst nach Ablauf des vollen vergrößerten Zeitintervalls DeltaT ausgeschaltet werden.

In dieser Figur 1 entspricht ein höherer Wert der ersten Signale S1 einer niedrigeren Umgebungshelligkeit. Im umgekehrten Fall tauschen sich die Begriffe überschreiten und unterschreiten natürlich aus.

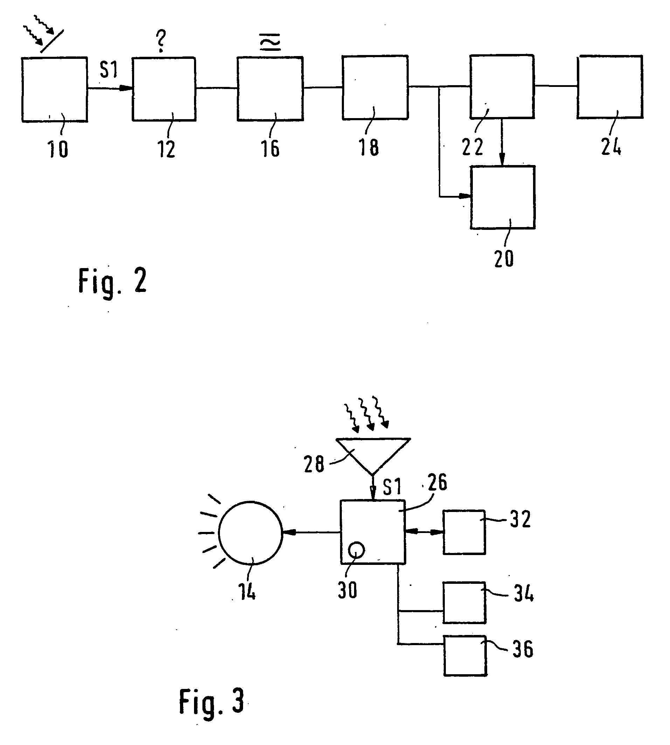

Der genaue Verfahrensablauf ist in Figur 2 nochmals dargestellt. In einem ersten Detektionsschritt 10 wird die Umgebungshelligkeit erfaßt und erste Signale S1 generiert. In einem zweiten Bewertungsschritt 12 werden die ersten Signale S1 ausgewertet und beispielsweise Beleuchtungseinrichtungen 14 eingeschaltet. Anschließend wird in einem Auswahlschritt 16 der weitere Verlauf der ersten Signale S1 beobachtet und insbesondere überprüft, ob diese während der weiteren Zeitspanne DT innerhalb eines Signalgrößenfensters SGF liegen. In Abhängigkeit dieses Vergleichsergebnisses wird das Zeitintervall DeltaT ausgewählt.

Sinken die ersten Signale S1 unter eine erste Schwelle SW1 ab, so beginnt das Zeitintervall DeltaT in diesem Unterschreitungsschritt 18 zu laufen. Bleiben die ersten Signale S1 während dem gesamten Zeitintervall DeltaT unterhalb der ersten Schwelle SW1, so werden die Beleuchtungseinrichtungen 14 zum Zeitpunkt T2 nach Ablauf des Zeitintervalls DeltaT in einem Ausschaltschritt 20 ausgeschaltet und das Zeitintervall DeltaT auf das Normalzeitintervall zurückgesetzt.

Überschreiten die ersten Signale S1 jedoch vor Ablauf des Zeitintervalls DeltaT die erste Schwelle SW1, so wird die Zeitzählung in einem Stoppschritt 22 angehalten unterbrochen, und erst dann wieder fortgesetzt wenn die ersten Signale S1 die erste Schwelle SW1 wieder unterschreiten. Zum Zeitpunkt T2 an dem das Zeitintervall DeltaT abgelaufen ist wird wieder im Ausschaltschritt 20 die Beleuchtungseinrichtungen 14 abgeschaltet und das Zeitintervall DeltaT auf das Normalzeitintervall zurückgesetzt.

Nimmt die Umgebungshelligkeit vor Ablauf des Zeitintervalls DeltaT so stark ab und damit die ersten Signale S1 so stark zu, so daß diese die zweite Schwelle SW2 überschreiten so bleiben die Beleuchtungseinrichtungen 14 eingeschaltet und das vergrößerte Zeitintervall DeltaT wird in einem Initialisierungsschritt 24 an den Anfang des vergrößerten Zeitintervalls DeltaT zurückgesetzt.

In Figur 3 ist eine erfindungsgemäße Vorrichtung in einer schematischen Darstellung gezeigt. Die Beleuchtungseinrichtungen 14 sind von einer Steuereinrichtung 26 steuerbar. Diese Steuereinrichtung 26 empfängt die Signale S1 eines Helligkeitsensors 28 und verarbeitet diese nach dem erfindungsgemäßen Verfahren. Dazu weist die Steuereinrichtung 26 eine Dämmerungserkennung 30 auf. Weiterhin ist die Steuereinrichtung 26 mit einem getakteten Zähler 32 verbunden. Dieser getaktete Zähler 32 wird nach Ablauf des weiteren Zeitintervalls DT mit dem festgesetzten Zeitintervall DeltaT initialisiert und von der Steuereinrichtung 26 zum Zeitpunkt T1 gestartet. Nach diesem Start kann die Steuereinrichtung 26 den Zähler 32 auch temporär anhalten und wieder weiterzählen lassen. Typischerweise wird der Zähler 32 von der Steuereinrichtung auf einen Wert, beispielsweise 5, gesetzt. Der Zähler dekrementiert diesen Wert in Sekundenschritten bis der Wert 0 erreicht ist. An diesem Zeitpunkt T2 werden die Beleuchtungseinrichtungen 14 von der Steuereinrichtung 26 ausgeschaltet.

In einer Variation der Erfindung kann das verlängerte Zeitintervall DeltaT bei Überschreiten der zweiten Schwelle SW2 auch vollständig zurückgesetzt, also auf das Normalzeitintervall zurückgesetzt werden.

Natürlich ist es auch möglich das Zeitintervall DeltaT durch andere Einflußgrößen zu verändern. Explizit sei an dieser Stelle ein Regensensor 34 erwähnt, der starken Regen erkennt und das Zeitintervall DeltaT bei diesem verlängert. So können die Beleuchtungseinrichtungen 14 beispielsweise eingeschaltet werden, sobald der Regensensor 34 einen Dauerwischbetrieb einer Scheibenwischvorrichtung aktiviert und eine bestimmte Umgebungshelligkeit unterschritten wird. Zur Vermeidung eines Blinklichteffektes kann dies auch mit einer zeitlichen Verzögerung geschehen, so daß die Beleuchtungseinrichtungen erst dann aktiviert werden, wenn die Scheibenwischvorrichtung bereits eine gewisse Zeit - beispielseise 10 Sekunden - in Betrieb ist. In diesem Fall kann dann das Zeitintervall DeltaT vergrößert werden. Vorzugsweise beginnt das Zeitintervall DeltaT dann, wenn die Scheibenwischvorrichtung ihren Dauerwischbetrieb einstellt.

Natürlich können auch mehrere voneinander verschiedene Zeitintervalle DeltaT vorgesehen sein, die beispielsweise je nach Art des Wischbetriebs - Intervall, Stufe I oder Stufe II - unterschiedlich gesetzt werden.

In einer Variation kann der Zähler auch wieder zurückgesetzt oder angehalten werden, wenn es vor Ablauf des Zeitintervalls DeltaT wieder zu regnen beginnt, d.h. vom Regensensor 34 ein erneuter Wischbetrieb veranlaßt wird.

Ebenso kann beispielsweise ein Ortsbestimmungsmodul 36, beispielsweise mittels eines GPS-Systems, den Ort des Kraftfahrzeugs bestimmen und aufgrund dieser Information das Zeitintervall verändern.

Das Zeitintervall kann auch durch Rundfunksignale, insbesondere Wetterinformationen verändert werden, oder durch eine aus Ort und Zeit bestimmte Dämmerungsfunktion.

Weiterhin ist es möglich, all diese Komponenten in ein einziges Modul zu bauen, welches beispielsweise an der Front- oder Heckscheibe eines Kraftfahrzeugs angeordnet werden kann.

Ferner ist eine Integration in ein Navigationssystem möglich, so daß auch Karteninformationen zu Veränderung des Zeitintervalls herangezogen werden können. Denkbar ist auch, die Informationen an weitere im Kraftfahrzeug befindliche Komponenten wie Zentralelektronik, Bremssystem, Fahrdynamikregelungssystem, Bremsassistenten oder Motorsteuerung weiterzuleiten. Insbesondere kann die Vorrichtung eine CAN-Bus Schnittstelle aufweisen.

Natürlich können die Schwellen SW1 und SW2 und das Signalgrößenfenster SGF auch so gestaltet sein, daß sie durch eine Verstelleinrichtung, beispielsweise Potentiometer oder eine spezielle Steuer-/oder Regeleinrichtung, jederzeit - auch während der Fahrt - justiert werden können.

## Patentansprüche

1. Verfahren zum automatischen Steuern von Beleuchtungseinrichtungen (14), insbesondere eines Kraftfahrzeugs, mit einem Helligkeitssensor (28) der erste Signale (S1) abgibt, wobei die Beleuchtungseinrichtungen (14) nach einem Zeitintervall (DeltaT) ausgeschaltet werden, das zu dem Zeitpunkt (T1) beginnt, an dem die ersten Signale (S1) eine erste Schwelle (SW1) unter- bzw. überschreiten, wobei die Länge des Zeitintervalls (DeltaT) veränderbar ist, **dadurch gekennzeichnet, daß** die Länge des Zeitintervalls (DeltaT) in Abhängigkeit der ersten Signale (S1) vergrößerbar ist.

2. Verfahren nach einem der vorhergehenden Ansprüche, **dadurch gekennzeichnet, dass** das Zeitintervall (DeltaT) während der Dämmerung länger gewählt wird, als zu einer anderen Tages- oder Nachtzeit.

3. Verfahren nach einem der vorhergehenden Ansprüche, **dadurch gekennzeichnet, dass** das Zeitintervalls (DeltaT) im Vergleich zu einem Normalzeitintervall vergrößert wird, wenn die ersten Signale (S1) während eines weiteren Zeitintervalls (DT) innerhalb eines Signalgrößenfensters (SGF) liegen.

4. Verfahren nach Anspruch 3, **dadurch gekennzeichnet, dass** das Signalgrößenfenster (SGF) von der ersten Schwelle (SW1) und einer zweiten Schwelle (SW2), insbesondere einer Einschaltschwelle gebildet wird.

5. Verfahren nach einem der vorhergehenden Ansprüche, **dadurch gekennzeichnet, dass** die Zeitzählung des Zeitintervalls (DeltaT) angehalten wird, wenn die erste Signale (S1) die erste Schwelle (SW1) wieder über- bzw. unterschreiten.

6. Verfahren nach Anspruch 5, **dadurch gekennzeichnet, dass** das Zeitintervall (DeltaT) auf das volle vergrößerte Zeitintervall (DeltaT) zurückgesetzt wird, wenn die zweite Schwelle (SW2) über- bzw. unterschritten wird, und auf das Normalzeitintervall zurückgesetzt wird, wenn die Beleuchtungseinrichtungen ausgeschaltet werden.

7. Vorrichtung zum automatischen Steuern von Beleuchtungseinrichtungen (14), zur Durchführung des Verfahrens nach einem der vorhergehenden Ansprüche, mit mindestens einem Helligkeitssensor (28), der erste Signale (S1) abzugeben vermag und einer Steuereinrichtung (26) die mindestens eine Beteuchtungseinrichtung (14) nach einem Zeitintervalls (DeltaT) abschaltet und das Zeitintervall (DeltaT) zu dem Zeitpunkt (T1) beginnt, wenn die ersten Signale (S1) eine erste Schwelle (SW1) unter- bzw. überschreiten, wobei die Länge des Zeitintervalls (DeltaT) veränderbar ist, **dadurch gekennzeichnet, dass** die Steuereinrichtung (26) derart ausgebildet ist, dass die Länge des Zeitintervalls (DeltaT) in Abhängigkeit der ersten Signale (S1) veränderbar ist.

8. Vorrichtung nach Anspruch 7, **dadurch gekennzeichnet, dass** zur Zeitzählung innerhalb des Zeitintervalls (DeltaT) ein getakteter Zähler (32) vorgesehen ist und die Steuereinrichtung (26) derart ausgebildet ist, daß der Zähler (32) zum Zeitpunkt (T1) zu zählen beginnt, bei abermaligen über- bzw. unterschreiten der ersten Signale (S1) der ersten Schwelle (SW1) stoppt, bei abermaligen unter- bzw. überschreiten der ersten Schwelle (SW1) weiterzählt und bei über- bzw. unterschreiten einer weiteren Schwelle (SW2) auf das volle vergrößerte Zeitintervall (DeltaT) zurückgesetzt wird.

## Claims

1. Method for automatically controlling illumination devices (14), in particular of a motor vehicle, having a brightness sensor (28) which outputs first signals (S1), wherein the illumination devices (14) are switched off after a time interval (DeltaT) which starts at the time (T1) at which the first signals (S1) undershoot or exceed a first threshold (SW1), wherein the length of the time interval (DeltaT) can be varied, **characterized in that** the length of the time interval (DeltaT) can be increased as a function of the first signals (S1).

2. Method according to the preceding claim, **characterized in that** a longer time interval (DeltaT) is selected during twilight than at a different time of day or night.

3. Method according to one of the preceding claims, **characterized in that** the time interval (DeltaT) is increased compared to a normal time interval if the first signals (S1) during a further time interval (DT) are within a signal magnitude window (SGF).

4. Method according to Claim 3, **characterized in that** the signal magnitude window (SGF) is formed by the first threshold (SW1) and a second threshold (SW2), in particular a switch-on threshold.

5. Method according to one of the preceding claims, **characterized in that** the time counting of the time interval (DeltaT) is stopped if the first signals (S1) exceed or undershoot the first threshold (SW1) again.

6. Method according to Claim 5, **characterized in that** the time interval (DeltaT) is reset to the full, increased time interval (DeltaT) if the second threshold (SWT) is exceed or undershot, and is reset to the normal time interval if the illumination devices are switched off.

7. Device for automatically controlling illumination devices (14) for carrying out the method according to one of the preceding claims, having at least one brightness sensor (28) which is capable of outputting first signals (S1), and a control device (26) which switches off the at least one illumination device (14) after a time interval (DeltaT), and the time interval (DeltaT) starts at the time (T1) if the first signals (1) undershoot or exceed a first threshold (SW1), wherein the length of the time interval (DeltaT) can be varied, **characterized in that** the control device (26) is embodied in such a way that the length of the time interval (DeltaT) can be varied as a function of the first signals (S1).

8. Device according to Claim 7, **characterized in that** a clocked counter (32) is provided for time accounting within the time interval (DeltaT), and the control device (26) is embodied in such a way that the counter (32) starts to count at the time (T1), stops when the first signals (S1) repeatedly exceed or undershoot the first threshold (SW1), continues to count when the first threshold (SW1) is repeatedly undershot or exceeded, and is reset to the full, increased time interval (DeltaT) when a further threshold (SW2) is exceeded or undershot.

## Revendications

1. Procédé de commande automatique des installations d'éclairage (14) notamment celles d'un véhicule automobile comportant un capteur de luminosité (28) fournissant les premiers signaux (S1), les installations d'éclairage (14) étant coupées après un intervalle de temps (Delta T), cet intervalle commençant à l'instant (T1) auquel les premiers signaux (S1) dépassent vers le haut ou vers le bas un premier seuil (SW 1), la longueur de l'intervalle de temps (Delta T), étant variable,
**caractérisé en ce que**
la longueur de l'intervalle de temps (Delta T) est augmentée en fonction des premiers signaux (S1).

2. Procédé selon la revendication 1,
**caractérisé en ce que**
l'intervalle de temps (Delta T) est choisi plus long au crépuscule qu'aux autres moments de la journée ou de la nuit.

3. Procédé selon l'une des revendications précédentes,
**caractérisé en ce que**
l'intervalle de temps (Delta T), est augmenté par comparaison à un intervalle de temps normal si les premiers signaux (S1) se situent dans une fenêtre de dimension de signaux (SGF) au cours d'un autre intervalle de temps (Delta T),

4. Procédé selon la revendication 3,
**caractérisé en ce que**
la fenêtre de dimension de signal (SGF) est formée à partir du premier seuil (SW1) et d'un second seuil (SW2), notamment d'un seuil de branchement.

5. Procédé selon l'une des revendications précédentes,
**caractérisé en ce qu'**
on arrête le décompte de temps de l'intervalle (Delta T), lorsque les premiers signaux (S1) dépassent de nouveau vers le haut ou vers le bas le premier seuil (SW1).

6. Procédé selon la revendication 5,
**caractérisé en ce qu'**
on remet l'intervalle de temps (Delta T), à la valeur totale agrandie de l'intervalle de temps (Delta T), en cas de dépassement du second seuil (SW2) vers le haut ou vers le bas et on revient à l'intervalle de temps normal lorsque l'on coupe les installations d'éclairage.

7. Dispositif de commande automatique d'installation d'éclairage (14) pour la mise en oeuvre du procédé selon l'une des revendications précédentes, avec au moins un capteur de luminosité (28) générant les premiers signaux (S1) et une installation de commande (26) qui coupe au moins une installation d'éclairage (14) après un intervalle de temps (Delta T), et l'intervalle de temps (Delta T), commence à l'instant (T1) lorsque les premiers signaux (S1) dépassent vers le haut ou vers le bas un premier seuil (SW1), la longueur de l'intervalle de temps (Delta T), étant variable,
**caractérisé en ce que**
l'installation de commande (26) est réalisée pour modifier la longueur de l'intervalle de temps (Delta T), en fonction des premiers signaux variables (S1).

8. Dispositif selon la revendication 7,
**caractérisé en ce que**
pour le décompte du temps dans l'intervalle de temps (Delta T), on utilise un compteur cadencé (32) et l'installation de commande (26) est réalisée pour que le compteur (32) commence à compter à l'instant (T1) et qu'il s'arrête chaque fois que l'on dépasse vers le haut ou vers le bas les premiers signaux (S1) du premier seuil (SW1), et en cas de répétition du dépassement vers le haut ou vers le bas du seuil inférieur (SW1), le comptage continue et en cas de dépassement vers le haut ou vers le bas d'un autre seuil (SW2), on revient à l'intervalle de temps total agrandi (Delta T).
